# EUROPÄISCHE PATENTSCHRIFT

(11) **EP 4 040 001 B1**
(45) Veröffentlichungstag und Bekanntmachung des Hinweises auf die Patenterteilung: **29.01.2025**
(21) Anmeldenummer: 22154445.5
(22) Anmeldetag: 01.02.2022
(51) Int. Cl.: F16D 43/20, F16D 9/10

(54) **DREHDURCHFÜHRUNG**
ROTARY FEED-THROUGH
PASSAGE TOURNANT

(30) Priorität: 05.02.2021 DE 102021201087
(43) Veröffentlichungstag der Anmeldung: 10.08.2022
(73) Patentinhaber: Christian Maier GmbH & Co. KG Maschinenfabrik, 89520 Heidenheim (DE)
(72) Erfinder: Schwenk, Günther, 89520 Heidenheim (DE); Szam, Peter, 89547 Gerstetten (DE); Frey, Christof, 89522 Heidenheim (DE)
(74) Vertreter: Dr. Weitzel & Partner

(56) Entgegenhaltungen:
- EP-A1- 3 828 431
- DE-A1- 2 816 374
- DE-A1- 3 600 196
- DE-A1- 3 720 208
- JP-U- S4 953 152

## Beschreibung

Die vorliegende Erfindung betrifft eine Drehdurchführung im Einzelnen gemäß dem Oberbegriff von Anspruch 1.

Drehdurchführungen zum abgedichteten Übergang eines Fluids zwischen einem stationären und einem rotierenden System sind aus dem Stand der Technik bekannt. Beispielsweise wird auf WO 2019/206480 A1 verwiesen. Diese umfassen einen Stator, beispielsweise in Form eines stationären Gehäuses, welcher einen oder mehrere Anschlüsse zum Einleiten oder Ausleiten des Fluids aufweist. Der Stator übergibt oder übernimmt das Fluid in oder aus einem drehbar gelagerten Rotor, wofür sich wenigstens ein Fluidkanal sowohl durch den Stator als auch durch den Rotor erstreckt, wobei die Schnittstelle im Fluidkanal zwischen dem Stator und dem Rotor gegenüber der Umgebung abgedichtet ist. Innerhalb des Rotors ist der Fluidkanal in der Regel in zwei drehstarr miteinander verbundene Abschnitte unterteilt, wobei ein Abschnitt Bestandteil der Drehdurchführung ist und der andere Abschnitt Teil einer mit dem Fluid zu versorgenden Maschine ist und durch einen Motor angetriebenen wird. Bei dem Teil der Maschine kann es sich zum Beispiel um eine durch ein Öl oder sonstiges Medium beheizte Walze handeln, beispielsweise um eine Kalanderwalze in der Papierverarbeitung, Textilindustrie, Folienherstellung oder in Laminieranlagen. Solche Maschinenteile weisen zumeist eine hohe Masse auf und können durch das daraus resultierende hohe Massenträgheitsmoment und aufgrund der üblicherweise hohen Drehzahl nicht schnell bis zum Stillstand abgebremst werden.

Im Falle eines Lagerschadens im Lager zwischen dem Rotor der Drehdurchführung und dem Stator der Drehdurchführung kann sich eine Blockade im Lager ergeben, sodass der Rotor und der Stator unbeabsichtigt drehfest aneinandergekoppelt werden. Bei einem hohen am Rotor anliegenden Massenträgheitsmoment kann der Rotor dabei den Stator mittreißen, wobei der oder die Fluidanschlüsse am Stator abgerissen werden, sodass das in dem entsprechenden Fluidanschluss geführte Fluid unkontrolliert in die Umgebung entweicht. Dies ist besonders dann gravierend, wenn es sich um ein umweltschädliches oder gesundheitsgefährdendes Fluid, beispielsweise das genannte heiße Medium, handelt. Aufgrund des hohen Massenträgheitsmoments ist es auch nicht möglich, den Rotor schlagartig abzubremsen, um das Mitreißen des Stators zu verhindern.

DE 38 24 327 A1 offenbart ein Getriebe mit Überlastsicherung, insbesondere für Kettenantriebe bei Bergbaumaschinen, wie vor allem Kohlenhobel. Ein auf einer Hülse vorgesehenes Antriebszahnrad treibt über eine Überlastkupplung eine Getriebewelle an, die ausgangsseitig ein Antriebsrad umfasst. Die Überlastkupplung weist ein Lamellenpaket und zwei Lamellenträger auf und wird durch Federkraft geschlossen und kann hydraulisch gelüftet werden. Am Gehäuse ist ein Schnellschaltventil angeordnet, bei dessen Schaltung ein hydraulisches Druckmedium über eine Drehdurchführung einem Druckraum der Überlastkupplung zugeführt wird, um diese zu lüften. Die Drehdurchführung dient ausschließlich der Zufuhr des Druckmediums zu der Überlastkupplung und ist entsprechend nur einseitig der Überlastkupplung vorgesehen.

EP 1 336 807 A1 offenbart eine Drehdurchführung zum Zuführen eines Wärmeträgermediums.

US 4 186 570 A offenbart eine Scherstiftbaugruppe in einer Kupplung.

Das nachveröffentlichte Dokument EP 3 828 431 A1 offenbart eine Drehdurchführung, deren Rotor zwei Rotorabschnitte aufweist, durch welche sich wenigstens ein Fluidkanal erstreckt und die mit einer Überlastkupplung aneinander gekoppelt sind. Die beiden Kupplungshälften können im gekoppelten Zustand durch ein Verbindungselement aneinander gekoppelt sein, wobei das Verbindungselement eine formschlüssige und/oder kraftschlüssige und/oder stoffschlüssige Verbindung zu jeweils beiden Kupplungshälften aufweist.

Die Dokumente DE 28 16 374 A1, DE 36 00 196 A1, DE 37 20 208 A1 und JP S49 53152 U beschreiben kraftschlüssige Schaltkupplungen beziehungsweise Sicherheitskupplungen in Maschinenantrieben.

Der vorliegenden Erfindung liegt die Aufgabe zugrunde, eine Drehdurchführung anzugeben, welche auch im Fall einer Lagerblockade in der Drehdurchführung eine unkontrollierte Freisetzung des Fluids an die Umgebung vermeidet. Die Vermeidung der Freisetzung des Fluids soll vorteilhaft zerstörungsfrei erfolgen und der Nennbetriebszustand der Drehdurchführung soll nach Behebung der Lagerblockade bevorzugt einfach und schnell wieder hergestellt werden können.

Die erfindungsgemäße Aufgabe wird durch eine Drehdurchführung mit den Merkmalen von Anspruch 1 gelöst. In den abhängigen Ansprüchen werden vorteilhafte und besonders zweckmäßige Ausgestaltungen der Erfindung angegeben.

Eine erfindungsgemäße Drehdurchführung dient der abgedichteten Übergabe von Fluid zwischen einem stationären und einem rotierenden System. Die Drehdurchführung umfasst einen Stator, beispielsweise in Form eines stationären Gehäuses, und einen um eine Drehachse rotierbaren beziehungsweise im Betrieb der Drehdurchführung um die Drehachse umlaufenden Rotor, der im oder am Stator mittels wenigstens einem Lager gelagert ist. Das Lager kann als Hauptlager bezeichnet werden und ist beispielsweise als Wälzlager ausgeführt, umfassend eine oder mehrere Lagerreihen. Prinzipiell kann das Lager jedoch auch als Gleitlager ausgeführt sein.

Am Stator ist wenigstens ein Fluidanschluss vorgesehen. Insbesondere sind mehrere Fluidanschlüsse vorgesehen, beispielsweise zumindest ein Vorlauf und ein Rücklauf für ein mit der Drehdurchführung zu übergebendes Fluid. Bei dem Fluid kann es sich um eine Flüssigkeit oder auch um ein dampfförmiges oder gasförmiges Medium handeln, beispielsweise um ein Heizmedium für eine Kalanderwalze oder Prozessmedium für eine Prozessmaschine.

Wenigstens ein Fluidkanal oder eine Vielzahl von Fluidkanälen erstreckt sich abgedichtet gegenüber einer Umgebung durch den Stator und den Rotor. Über den wenigstens einen Fluidanschluss kann demnach Medium in den wenigstens einen Fluidkanal übergeben werden oder aus dem wenigstens einen Fluidkanal abgeführt werden.

Erfindungsgemäß weist der Rotor zwei Rotorabschnitte und wenigstens eine Überlastkupplung auf, wobei die beiden Rotorabschnitte mittels der wenigstens einen Überlastkupplung derart aneinander gekoppelt sind, dass bei Anliegen eines Drehmoments an der wenigstens einen Überlastkupplung mit einem Betrag unterhalb eines konstant oder variabel vorgegebenen Auslösemoments der wenigstens einen Überlastkupplung die beiden Rotorabschnitte drehstarr aneinander gekoppelt sind und bei Anliegen eines Drehmoments an der wenigstens einen Überlastkupplung mit einem Betrag gleich oder größer als das vorgegebene Auslösemoment die beiden Rotorabschnitte in einer Drehrichtung um die Drehachse entkoppelt und relativ zueinander um die Drehachse verdrehbar zueinander gelagert sind, und wobei die wenigstens eine Überlastkupplung zwei Kupplungshälften umfasst, die formschlüssig mittels wenigstens einem elastisch vorgespannten Klemmelement im gekoppelten Zustand der beiden Rotorabschnitte drehstarr miteinander gekoppelt sind.

Der wenigstens eine gegenüber der Umgebung abgedichtete Fluidkanal erstreckt sich durch die beiden Rotorabschnitte, insbesondere in deren Axialrichtung. Somit wird der wenigstens eine Fluidkanal bevorzugt in Umfangsrichtung von beiden Rotorabschnitten umschlossen, insbesondere in einem ersten axialen Abschnitt des Rotors nur vom ersten Rotorabschnitt und in einem zweiten axialen Abschnitt des Rotors nur vom zweiten Rotorabschnitt und/oder in einem gemeinsamen axialen Abschnitt, in welchem ein Rotorabschnitte den anderen in der Umfangsrichtung umschließt, von beiden Rotorabschnitten.

Der wenigstens eine Fluidkanal kann bevorzugt getrennt und abgedichtet gegenüber der Überlastkupplung angeordnet sein, das bedeutet, die Überlastkupplung wird nicht mit Fluid aus dem Fluidkanal beaufschlagt und/oder betätigt. Insbesondere löst die Überlastkupplung unabhängig von einem Fluiddruck im Fluidkanal aus.

Das Auslösen der der Überlastkupplung erfolgt vorteilhaft selbststätig, insbesondere zumindest beim Anliegen des Auslösemoments ausschließlich in Abhängigkeit des an der Überlastkupplung anliegenden Drehmoments. Die Überlastkupplung kann somit grundsätzlich als passive Überlastkupplung ausgeführt sein, insbesondere ausschließlich passiv. Gemäß einer später näher beschriebenen Ausführungsform kann sie vor dem selbsttätigen Auslösen zusätzlich aktiv angesteuert oder betätigt werden, um einem passiven Auslösen zuvorzukommen.

Die beiden Kupplungshälften der Überlastkupplung können an den beiden Rotorabschnitten montiert sein oder auch integral mit den beiden Rotorabschnitten ausgeführt sein. Auch die Montage einer Kupplungshälfte an einem Rotorabschnitt und die integrale Gestaltung der anderen Kupplungshälfte mit dem anderen Rotorabschnitt kommt in Betracht. Unter integraler Ausführungsform ist eine einteilige und/oder stoffschlüssige Ausführungsform zu verstehen.

Durch Vorsehen des wenigstens einen elastisch vorgespannten Klemmelementes zwischen den Kupplungshälften kann ein nicht zerstörendes Auslösen der Überlastkupplung erreicht werden, das heißt ein Schalten der Überlastkupplung aus einem drehstarr aneinander gekoppelten Zustand der beiden Kupplungshälften in einen entkoppelten Zustand der beiden Kupplungshälften, sodass diese die drehstarre Verbindung zwischen den beiden Rotorabschnitten aufheben. Somit ist es nach dem Auslösen der Überlastkupplung nicht notwendig, die Überlastkupplung auszutauschen, um einen Weiterbetrieb der Drehdurchführung, nachdem beispielsweise die eingangs genannte Lagerblockade behoben wurde, zu ermöglichen.

Bevorzugt ist das Auslösemoment der wenigstens einen Überlastkupplung variabel einstellbar.

Wenn mehrere Überlastkupplungen im Kraftfluss vom ersten Rotorabschnitt zum zweiten Rotorabschnitt parallel zueinander angeordnet sind, so addieren sich die maximal zulässigen Drehmomente an den Überlastkupplungen beziehungsweise die Auslösemomente der Überlastkupplungen. Beispielsweise kann mit fünf Überlastkupplungen das fünffache Drehmoment zwischen den beiden Rotorabschnitten übertragen werden, bevor die beiden Rotorabschnitte voneinander entkoppelt werden. Selbstverständlich ist es auch möglich, Überlastkupplungen mit zueinander verschiedenen Auslösemomenten parallel im Kraftfluss zwischen den beiden Rotorabschnitten vorzusehen, um das Gesamtauslösemoment in kleineren Intervallen einstellen zu können.

Besonders bevorzugt weist die wenigstens eine Überlastkupplung eine Rückstellvorrichtung auf, mit welcher die wenigstens eine Überlastkupplung manuell oder mittels eines ansteuerbaren Aktuators aus der entkoppelten Stellung in die gekoppelte Stellung schaltbar ist.

Damit wird eine Rückstellung der Überlastkupplung beziehungsweise ein Notauslösen der Überlastkupplung besonders leicht möglich.

Besonders bevorzugt ist die Rückstellvorrichtung im eingebauten Zustand der Überlastkupplung in der Drehdurchführung von außen manuell betätigbar. Damit kann eine Demontage von Teilen der Drehdurchführung vermieden werden.

Es ist auch möglich, zusätzlich oder alternativ einen Aktuator vorzusehen, mit welchem die wenigstens eine Überlastkupplung gezielt auslösbar ist, sozusagen fernsteuerbar ist, um in einem Störfall nicht erst auf die Lagerblockade warten zu müssen und damit den Betrieb der Drehdurchführung sicherer zu machen. Die Überlastkupplung kann dadurch schon, wenn ein Drehmoment mit einem Betrag unterhalb des vorgegebenen Auslösemoments an der Überlastkupplung anliegt, durch Ansteuern des Aktuators, beispielsweise in einem Kontrollstand der mit der Drehdurchführung versorgten Maschine, entkoppelt werden.

Besonders bevorzugt sind die beiden Rotorabschnitte mit wenigstens einem rotorintegrierten Wälzlager gegeneinander gelagert. Dieses wenigstens eine rotorintegrierte Wälzlager, bevorzugt wenigstens zwei rotorintegrierte Wälzlager, sind somit zusätzlich zu dem wenigstens einen Lager (Hauptlager) vorgesehen, mittels welchem der Rotor der Drehdurchführung im oder am Stator gelagert ist.

Gemäß einer günstigen Gestaltung umschließt der zweite Rotorabschnitt den ersten Rotorabschnitt in Umfangsrichtung um die Drehachse und der erste Rotorabschnitt begrenzt den Fluidkanal in Umfangsrichtung um die Drehachse. Somit kann man den ersten Rotorabschnitt auch als inneren Rotorabschnitt und den zweiten Rotorabschnitt auch als äußeren Rotorabschnitt bezeichnen.

Die erste Kupplungshälfte der Überlastkupplung kann besonders bevorzugt ein Gehäuse aufweisen, in welchem das wenigstens eine Klemmelement verschiebbar, insbesondere längsverschiebbar, und/oder verdrehbar entgegen der Kraft eines Federelementes, insbesondere Druckfederelementes, gelagert ist, und die zweite Kupplungshälfte der Überlastkupplung kann wenigstens eine Einrastöffnung aufweisen, die dem wenigstens einen Klemmelement derart gegenübersteht, dass im gekoppelten Zustand der Überlastkupplung das Klemmelement mit der Kraft des Federelementes in der einen Rastöffnung formschlüssig gehalten wird. Damit kann eine besonders zuverlässige und insbesondere hinsichtlich des Auslösemoments leicht einstellbare Überlastkupplung erreicht werden, wenn die Vorspannung und/oder der Kraft-Weg-Verlauf des Federelementes einstellbar ist.

Die zweite Kupplungshälfte beziehungsweise eine Vielzahl von zweiten Kupplungshälften der um die Drehachse hintereinander angeordneten Überlastkupplungen kann durch einen Einrastring gebildet werden, in dem eine Mehrzahl von Einrastöffnungen in Umfangsrichtung um die Drehachse hintereinander angeordnet sind. Damit wird eine besonders kompakte Gestaltung ermöglicht.

Der erste Rotorabschnitt kann bevorzugt mit einem Dichtring, der insbesondere aus Graphit besteht oder Graphit umfasst, gegen den zweiten Rotorabschnitt abgedichtet sein. Selbstverständlich können auch mehrere Dichtringe und/oder andere Dichtelemente vorgesehen sein, beispielsweise ein oder mehrere O-Ringe.

Besonders bevorzugt ist das Gehäuse der zweiten Kupplungshälfte von außen in den zweiten Rotorabschnitt eingesteckt oder eingeschraubt. Dabei kann das Gehäuse vollständig oder auch nur teilweise eingesteckt sein, das heißt im letzteren Fall ragt es teilweise aus dem zweiten Rotorabschnitt heraus. Dies ist besonders dann günstig, wenn an dem herausragenden Ende die Rückstellvorrichtung und/oder eine Einstellvorrichtung zur Einstellung des Auslösemoments angeordnet ist.

Besonders bevorzugt umfasst die Einstellvorrichtung einen verdrehbaren Ring am Gehäuse, mit welchem das Federelement im Gehäuse mehr oder minder gegen das wenigstens eine Klemmelement verspannbar ist, um dieses mit einer entsprechend mehr oder minder großen Vorspannkraft zu beaufschlagen und in die entsprechende Einrastöffnung zu drücken.

Günstig ist, wenn die Überlastkupplung eine Halteeinrichtung aufweist welche die Überlastkupplung nach dem Schalten in die entkoppelte Stellung, das heißt nach dem Auslösen, in der entkuppelten Stellung hält. Die Halteeinrichtung kann beispielsweise das wenigstens eine Klemmelement außerhalb der Einrastöffnung halten.

Durch Vorsehen der Überlastkupplung im Rotor der Drehdurchführung kann bei einer Lagerblockade des Lagers in der Drehdurchführung ein sicherer Betrieb der Drehdurchführung durch eine durch die Überlastkupplung im entkoppelten Zustand gebildete Behelfslagerung aufrechterhalten werden, bis der am Rotor angeschlossene Maschinenteil, beispielsweise die Kalanderwalze, bis zum Stillstand runtergefahren wurde. Der Stator kann aufgrund des Auslösens der Überlastkupplung nicht vom Rotor mitgerissen werden und, da die Abdichtung innerhalb der Überlastkupplung auch im entkoppelten Zustand der Überlastkupplung beibehalten wird, kann das Fluid nicht in die Umgebung entweichen.

Der Rotor der Drehdurchführung kann über das an ihm angeschlossene Maschinenteil, das einen entsprechenden Antrieb aufweist, angetrieben werden. Wenn die Überlastkupplung ausgelöst hat, wird entsprechend nur noch der im Antriebsleistungsfluss dem angeschlossenen Maschinenteil unmittelbar nachgeordnete Rotorabschnitt weiter angetrieben, wohingegen der andere Rotorabschnitt, der dem Stator im Kraftfluss vergleichsweise näher ist, insbesondere der zweite Rotorabschnitt, stehen bleibt.

Der Fluidanschluss an dem Stator kann beispielsweise einen Schlauch und/oder eine andere flexible Fluidleitung umfassen.

Die Erfindung soll nachfolgend anhand eines Ausführungsbeispiels und den Figuren exemplarisch beschrieben werden.

Es zeigen:
- Figur 1: ein Ausführungsbeispiel einer erfindungsgemäßen Drehdurchführung;
- Figur 2: eine schematische Darstellung einer möglichen Überlastkupplung.

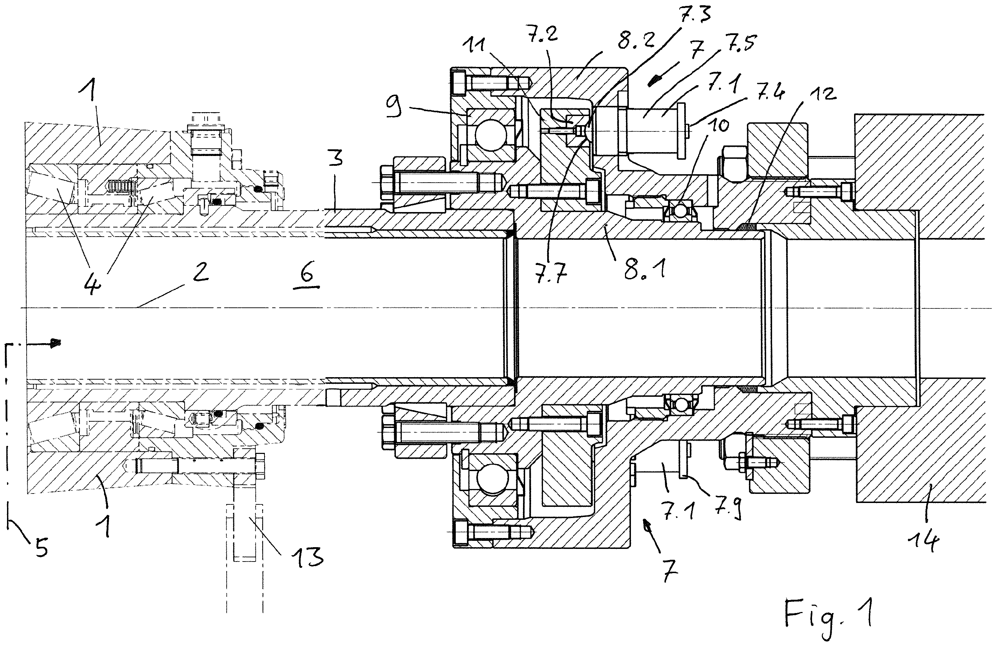

Die Drehdurchführung aus der Figur 1 umfasst einen Stator 1 und einen Rotor 3, der um die Drehachse 2 im Stator verdrehbar gelagert ist. Hierfür sind Lager 4 im Stator 1 vorgesehen, die als Hauptwälzlager bezeichnet werden können.

Der Stator 1 ist beispielsweise mit einer Drehmomenterfassungsvorrichtung 13 versehen, die ein auf den Stator 1 über den Rotor 3 übertragenes Drehmoment erfasst. Ein solches Drehmoment ergibt sich besonders bei einem Lagerschaden der Lager 4, wenn nämlich eine Blockade in den Lagern 4 auftritt.

Am Stator 1 ist wenigstens ein Fluidanschluss 5 vorgesehen, der hier nur sehr schematisch dargestellt ist und der in einem Fluidkanal 6 mündet, der sich abschnittsweise durch den Stator 1 und, wie hier gezeigt, durch den Rotor 3 erstreckt. Damit kann ein Fluid aus dem stationären Stator 1 in den umlaufenden Rotor 3 oder andersherum übergeben werden. Es können auch mehrere entsprechende Fluidanschlüsse 5 und Fluidkanäle 6 vorgesehen sein.

Der Rotor 3 weist einen ersten Rotorabschnitt 8.1 und einen zweiten Rotorabschnitt 8.2 auf, wobei beide Rotorabschnitte 8.1, 8.2 im störungsfreien Betrieb der Drehdurchführung gemeinsam um die Drehachse 2 umlaufen. Der Rotor 3 weist ferner wenigstens eine Überlastkupplung 7 auf, welche im störungsfreien Betrieb den ersten Rotorabschnitt 8.1 drehfest an den zweiten Rotorabschnitt 8.2 koppelt.

Die Überlastkupplung 7 weist eine erste Kupplungshälfte 7.1 und eine zweite Kupplungshälfte 7.2 auf. Die erste Kupplungshälfte 7.1 ist stets drehfest im zweiten Rotorabschnitt 8.2 gelagert und die zweite Kupplungshälfte 7.2 ist stets drehfest am ersten Rotorabschnitt 8.1 angeschlossen.

Im gezeigten Ausführungsbeispiel sind mehrere Überlastkupplungen 7 in Umfangsrichtung um die Drehachse 2 hintereinander angeordnet, wie nachfolgend noch erläutert wird.

Wenn beispielsweise eine Lagerblockade in den Lagern 4 auftritt, so droht die Gefahr, dass der Rotor 3 den Stator 4 mitreißt und in Umlauf versetzt, wodurch der Fluidanschluss 5 abgerissen werden kann und entsprechend Medium aus dem Fluidkanal 6 in die Umgebung austritt. Damit dies nicht passiert, lösen die Überlastkupplungen 7 aus, wenn jeweils deren Auslösemoment erreicht wird, wobei das Gesamtauslösemoment aller Überlastkupplungen gemeinsam kleiner ist als ein auf den Stator 1 wirkendes Drehmoment, welches zu einem Abriss oder einer Beschädigung des Fluidanschlusses 5 führen kann.

Im ausgelösten Zustand der Überlastkupplungen 7 kann sich der zweite Rotorabschnitt 8.2 relativ zu dem ersten Rotorabschnitt 8.1 um die Drehachse 2 verdrehen, sodass über den ersten Rotorabschnitt 8.1 zumindest im Wesentlichen kein Drehmoment auf den Stator 1 übertragen wird. Dabei ist der dann umlaufende zweite Rotorabschnitt 8.2 über die rotorintegrierten Wälzlager 9 und 10 auf dem ersten Rotorabschnitt 8.1 drehbar gelagert. Gleichzeitig sorgt, wie auch im gemeinsam umlaufenden Zustand der beiden Rotorabschnitte 8.1, 8.2, der Dichtring 12 für eine sichere Abdichtung des Fluidkanals 6 zwischen den beiden Rotorabschnitten 8.1 und 8.2. Der Dichtring 12 kann beispielsweise Graphit umfassen, sodass er entsprechend gute Schmiereigenschaften aufweist.

Am zweiten Rotorabschnitt 8.2 ist ein Maschinenteil 14 angeschlossen, beispielsweise eine Kalanderwalze, in welches mit dem wenigstens einen Fluidkanal 6 Fluid übergeben wird oder aus welchem mit dem wenigstens einen Fluidkanal 6 Fluid übernommen wird und welches insbesondere eine entsprechend lange Zeit benötigt, um in einem Störfall angehalten zu werden.

Im gezeigten Ausführungsbeispiel werden die zweiten Kupplungshälften 7.2 durch einen Einrastring 11 gebildet beziehungsweise in diesem gehalten, der Bestandteil des ersten Rotorabschnitts 8.1 ist. Die ersten Kupplungshälften 7.1 weisen jeweils ein Gehäuse 7.5 auf, das in den zweiten Rotorabschnitt 8.2 eingesetzt ist, und zwar derart, dass es an seinem hinteren Ende im eingesetzten Zustand von außen zugängig ist. An diesem hinteren Ende kann beispielsweise eine Rückstellvorrichtung 7.4 und/oder eine Auslösemomentverstelleinrichtung 7.9 angeordnet sein, wie nachfolgend noch erläutert wird.

Im gekoppelten Zustand der beiden Kupplungshälften 7.1, 7.2 und damit im gekoppelten Zustand der beiden Rotorabschnitte 8.1, 8.2 sind die beiden Kupplungshälften 7.1, 7.2 und damit die beiden Rotorabschnitte 8.1, 8.2 über elastisch vorgespannte Klemmelemente 7.3 formschlüssig miteinander verriegelt und laufen gemeinsam mit dem angeschlossenen Maschinenteil 14 um. Beim Schalten aus dem gekoppelten Zustand in den entkoppelten Zustand bewegen sich die Klemmelemente 7.3 aufgrund des Erreichens des Auslösemoments der Überlastkupplung 7 aus den Einrastöffnungen 7.7 in der zweiten Kupplungshälfte 7.2 heraus, weil der Einrastring 11 und damit der erste Rotorabschnitt 8.1 aufgrund der Blockade der Lager 4 drehfest am Stator 1 angeschlossen ist und stehen bleibt, wohingegen der zweite Rotorabschnitt 8.2 weiter mit dem angeschlossenen Maschineteil 14 umlaufen kann.

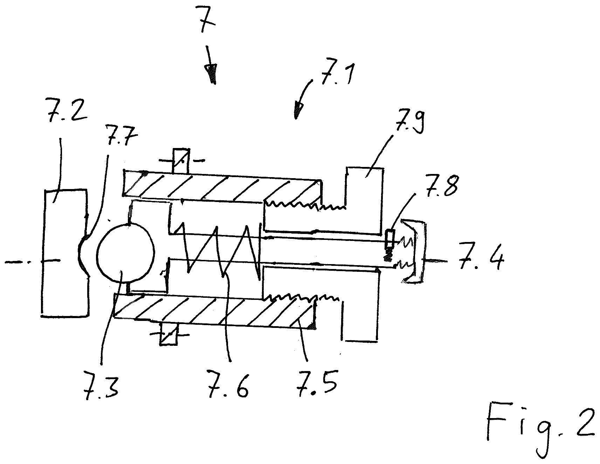

In der Figur 2 ist eine Überlastkupplung 7 nochmals schematisch im Detail gezeigt, hier im entkoppelten Zustand der beiden Kupplungshälften 7.1, 7.2. Wie man sieht, ist das Klemmelement 7.3 entgegen der Kraft eines Federelements 7.6 aus seiner Position in der Einrastöffnung 7.7 in der zweiten Kupplungshälfte 7.2 entfernbar, wobei hier der entfernte Zustand zu weit abgehoben von der zweiten Kupplungshälfte 7.2 gezeigt ist, um das Wirkprinzip zu verdeutlichen.

Wenn sich das Klemmelement 7.3 entgegen der Kraft des Federelementes 7.6, die mit der Auslösemomentverstelleinrichtung 7.9 verstellt werden kann, in seine entfernte Position bewegt hat, so hält die Halteeinrichtung 7.8 das Klemmelement 7.3 in der entfernten Stellung und damit die Überlastkupplung 7 in der entkoppelten Stellung, bis mit der Rückstellvorrichtung 7.4 die Halteeinrichtung 7.8 zurückgestellt wird und das Klemmelement 7.3 wieder in die Einrastöffnung 7.7 gedrückt wird.

Die Halteeinrichtung 7.8, die Auslösemomentverstelleinrichtung 7.9 und die Rückstellvorrichtung 7.4 sind hier nur sehr beispielhaft und schematisch dargestellt. Beispielsweise umfasst die Halteeinrichtung 7.8 einen federbelasteten Stift oder sonstiges federnd gelagertes Bauteil, das in einem Widerlager, hier an der Auslösemomentverstelleinrichtung 7.9 oder zum Beispiel dem Gehäuse 7.5, einrastet, um ein Zurückdrücken des Klemmelementes 7.3 mittels des Federelementes 7.6 in die Einrastöffnung 7.7 zu blockieren. Die Rückstellvorrichtung 7.4 drückt den Stift oder das sonstige federn gelagerte Bauteil der Halteeinrichtung 7.8 entgegen deren Federkraft aus der eingerasteten Position am Widerlager heraus. Zugleich kann beim gezeigten Ausführungsbeispiel die Rückstellvorrichtung 7.4 durch Anschlagen an der Auslösemomentverstelleinrichtung 7.9 oder zum Beispiel dem Gehäuse 7.5 verhindern, dass das Klemmelement 7.3 zu weit aus dem Gehäuse 7.5, in welchem das Klemmelement 7.3 beziehungsweise dessen Träger gleitet, geschoben wird.

Die Auslösemomentverstelleinrichtung 7.9 umfasst eine Schraube, die mehr oder minder weit in das Gehäuse 7.5 eingeschraubt werden kann und dadurch das Federelement 7.6, hier in Form einer Druckfeder, mehr oder minder vorspannt.

Andere Ausführungsformen der Überlastkupplung 7 sind jedoch möglich.

### Bezugszeichenliste

- 1: Stator
- 2: Drehachse
- 3: Rotor
- 4: Lager
- 5: Fluidanschluss
- 6: Fluidkanal
- 7: Überlastkupplung
- 7.1: erste Kupplungshälfte
- 7-2: zweite Kupplungshälfte
- 7.3: Klemmelement
- 7.4: Rückstellvorrichtung
- 7.5: Gehäuse
- 7.6: Federelement
- 7.7: Einrastöffnung
- 7.8: Halteeinrichtung
- 7.9: Auslösemomentverstelleinrichtung
- 8.1: erster Rotorabschnitt
- 8.2: zweiter Rotorabschnitt
- 9: rotorintegriertes Wälzlager
- 10: rotorintegriertes Wälzlager
- 11: Einrastring
- 12: Dichtring
- 13: Drehmomenterfassungsvorrichtung
- 14: angeschlossenes Maschinenteil

## Patentansprüche

1. Drehdurchführung mit einem Stator (1) und einem um eine Drehachse (2) rotierbaren Rotor (3), der im oder am Stator (1) mittels wenigstens einem Lager (4) im Betrieb der Drehdurchführung umlaufend um die Drehachse (2) gelagert ist; wobei
1.1 zumindest am Stator (1) wenigstens ein Fluidanschluss (5) vorgesehen ist und sich wenigstens ein Fluidkanal (6) abgedichtet gegenüber einer Umgebung durch den Stator (1) und den Rotor (3) erstreckt;
**dadurch gekennzeichnet, dass**
1.2 der Rotor (3) zwei Rotorabschnitte (8.1, 8.2), durch welche sich der wenigstens eine Fluidkanal (6) erstreckt, und wenigstens eine Überlastkupplung (7) umfasst, wobei die beiden Rotorabschnitte (8.1, 8.2) mittels der wenigstens einen Überlastkupplung (7) derart aneinander gekoppelt sind, dass bei Anliegen eines Drehmoments an der wenigstens einen Überlastkupplung (7) mit einem Betrag unterhalb eines Auslösemoments der wenigstens einen Überlastkupplung (7) die beiden Rotorabschnitte (8.1, 8.2) drehstarr aneinander gekoppelt sind und bei Anliegen eines Drehmoments an der wenigstens einen Überlastkupplung (7) mit einem Betrag gleich oder größer als das Auslösemoment die beiden Rotorabschnitte (8.1, 8.2) in Umfangsrichtung um die Drehachse (2) entkoppelt und relativ zueinander um die Drehachse (2) verdrehbar zueinander gelagert sind, **dadurch gekennzeichnet, dass**
1.3 die wenigstens eine Überlastkupplung (7) zwei Kupplungshälften (7.1, 7.2) umfasst, die formschlüssig mittels wenigstens einem elastisch vorgespannten Klemmelement (7.3) im gekoppelten Zustand der beiden Rotorabschnitte (8.1, 8.2) drehstarr miteinander gekoppelt sind.

2. Drehdurchführung gemäß Anspruch 1, **dadurch gekennzeichnet, dass** die Überlastkupplung (7) zerstörungsfrei und reversibel zwischen einer gekoppelten Stellung der Kupplungshälften (7.1, 7.2) und einer entkoppelten Stellung der Kupplungshälften (7.1, 7.2) schaltbar ist.

3. Drehdurchführung gemäß einem der Ansprüche 1 oder 2, **dadurch gekennzeichnet, dass** das Auslösemoment der wenigstens einen Überlastkupplung (7) variabel einstellbar ist.

4. Drehdurchführung gemäß einem der Ansprüche 2 oder 3, **dadurch gekennzeichnet, dass** die wenigstens eine Überlastkupplung (7) eine Rückstellvorrichtung (7.4) aufweist, mit welcher die wenigstens eine Überlastkupplung (7) manuell oder mittels eines ansteuerbaren Aktuators aus der entkoppelten Stellung in die gekoppelte Stellung schaltbar ist.

5. Drehdurchführung gemäß Anspruch 4, **dadurch gekennzeichnet, dass** die Rückstellvorrichtung (7.4) im eingebauten Zustand der Überlastkupplung (7) in der Drehdurchführung von außen manuell betätigbar ist.

6. Drehdurchführung gemäß einem der Ansprüche 1 bis 5, **dadurch gekennzeichnet, dass** die beiden Rotorabschnitte (8.1, 8.2) mit wenigstens einem rotorintegrierten Wälzlager (9, 10) gegeneinander gelagert sind.

7. Drehdurchführung gemäß einem der Ansprüche 1 bis 6, **dadurch gekennzeichnet, dass** das wenigstens eine Lager (4) als Wälzlager ausgeführt ist.

8. Drehdurchführung gemäß einem der Ansprüche 1 bis 7, **dadurch gekennzeichnet, dass** der zweite Rotorabschnitt (8.2) den ersten Rotorabschnitt (8.1) in Umfangsrichtung um die Drehachse (2) umschließt und der erste Rotorabschnitt (8.1) den Fluidkanal (6) in Umfangsrichtung um die Drehachse (2) begrenzt.

9. Drehdurchführung gemäß einem der Ansprüche 1 bis 8, **dadurch gekennzeichnet, dass** eine Mehrzahl von Überlastkupplungen (7) in Umfangsrichtung um die Drehachse (2) hintereinander im Rotor (3) angeordnet sind.

10. Drehdurchführung gemäß einem der Ansprüche 1 bis 9, **dadurch gekennzeichnet, dass** eine erste Kupplungshälfte (7.1) der Überlastkupplung (7) ein Gehäuse (7.5) aufweist, in welchem das wenigstens eine Klemmelement (7.3) verschiebbar, insbesondere längsverschiebbar, und/oder verdrehbar entgegen der Kraft eines Federelementes (7.6) gelagert ist, und eine zweite Kupplungshälfte (7.2) der Überlastkupplung (7) wenigstens eine Einrastöffnung (7.7) aufweist, die dem wenigstens einen Klemmelement (7.3) derart gegenübersteht, dass im gekoppelten Zustand der Überlastkupplung (7) das Klemmelement (7.3) mit der Kraft des Federelementes (7.6) in der Einrastöffnung (7.7) formschlüssig gehalten wird.

11. Drehdurchführung gemäß den Ansprüchen 9 und 10, **dadurch gekennzeichnet, dass** eine Vielzahl von zweiten Kupplungshälften (7.2) durch einen Einrastring (11) gebildet oder gehalten wird, in dem eine Mehrzahl von Einrastöffnungen (7.7) in Umfangsrichtung um die Drehachse (2) hintereinander angeordnet sind.

12. Drehdurchführung gemäß den Ansprüchen 8 und 10 oder 11, **dadurch gekennzeichnet, dass** das Gehäuse (7.5), insbesondere nur teilweise, von außen in den zweiten Rotorabschnitt (8.2) eingesteckt oder eingeschraubt ist.

13. Drehdurchführung gemäß einem der Ansprüche 9 bis 12, **dadurch gekennzeichnet, dass** die Überlastkupplung (7) eine Halteeinrichtung (7.8) aufweist, welche die Überlastkupplung (7) nach deren Auslösen in der entkoppelten Stellung hält.

14. Drehdurchführung gemäß den Ansprüchen 10 und 13, **dadurch gekennzeichnet, dass** die Halteeinrichtung (7.8) das wenigstens eine Klemmelement (7.3) außerhalb der Einrastöffnung (7.7) hält.

15. Drehdurchführung gemäß einem der Ansprüche 8 bis 14, **dadurch gekennzeichnet, dass** der erste Rotorabschnitt (8.1) mit wenigstens einem Dichtring (12), der insbesondere Graphit umfasst oder hieraus gebildet ist, gegen den zweiten Rotorabschnitt (8.2) abgedichtet ist.

## Claims

1. Rotary feedthrough having a stator (1) and a rotor (3) which is rotatable about an axis of rotation (2) and which, in or on the stator (1), is mounted by means of at least one bearing (4) so as to rotate about the axis of rotation (2) during operation of the rotary feedthrough;
1.1 at least one fluid connection (5) is provided at least on the stator (1) and at least one fluid channel (6) extends through the stator (1) and the rotor (3) in a sealed manner with respect to the surroundings;
**characterized in that**
1.2 the rotor (3) comprises two rotor sections (8.1, 8.2), through which the at least one fluid channel (6) extends, and at least one overload clutch (7), wherein the two rotor sections (8.1, 8.2) are coupled to one another by means of the at least one overload clutch (7) in such a way that, when a torque is applied to the at least one overload clutch (7) with a magnitude below a triggering torque of the at least one overload clutch (7), the two rotor sections (8.1, 8.2) are coupled to one another in a rotationally fixed manner and, when a torque is applied to the at least one overload clutch (7) with an amount equal to or greater than the triggering torque, the two rotor sections (8.1, 8.2) are decoupled in the circumferential direction around the axis of rotation (2) and are mounted such that they can rotate relative to one another around the axis of rotation (2),
**characterized in that**
1.3 the at least one overload clutch (7) comprises two clutch halves (7.1, 7.2) which are coupled to one another in a rotationally fixed manner in a form-fitting manner by means of at least one elastically pretensioned clamping element (7.3) in the coupled state of the two rotor sections (8.1, 8.2).

2. Rotary feedthrough according to claim 1, **characterized in that** the overload clutch (7) can be switched non-destructively and reversibly between a coupled position of the clutch halves (7.1, 7.2) and an uncoupled position of the clutch halves (7.1, 7.2).

3. Rotary feedthrough according to one of claims 1 or 2, **characterized in that** the release torque of the at least one overload clutch (7) can be adjusted variably.

4. Rotary feedthrough according to one of claims 2 or 3, **characterized in that** the at least one overload clutch (7) has a resetting device (7.4) by means of which the at least one overload clutch (7) can be switched from the decoupled position into the coupled position manually or by means of a controllable actuator.

5. Rotary feedthrough according to claim 4, **characterized in that** the restoring device (7.4) can be actuated manually from the outside in the installed state of the overload clutch (7) in the rotary feedthrough.

6. Rotary feedthrough according to one of the claims 1 to 5, **characterized in that** the two rotor sections (8.1, 8.2) are mounted with respect to one another by means of at least one roller bearing (9, 10) integrated in the rotor.

7. Rotary feedthrough according to one of the claims 1 to 6, **characterized in that** the at least one bearing (4) is designed as a rolling bearing.

8. Rotary feedthrough according to one of the claims 1 to 7, **characterized in that** the second rotor section (8.2) encloses the first rotor section (8.1) in the circumferential direction around the axis of rotation (2) and the first rotor section (8.1) bounds the fluid channel (6) in the circumferential direction around the axis of rotation (2).

9. Rotary feedthrough according to one of claims 1 to 8, **characterized in that** a plurality of overload clutches (7) are arranged one behind the other in the rotor (3) in the circumferential direction around the axis of rotation (2).

10. Rotary feedthrough according to one of claims 1 to 9, **characterized in that** a first clutch half (7.1) of the overload clutch (7) has a housing (7.5) in which the at least one clamping element (7.3) is mounted in a displaceable, in particular longitudinally displaceable, and/or rotatable manner against the force of a spring element (7.6), and a second clutch half (7.2) of the overload clutch (7) has at least one latching opening (7.7) which is located opposite the at least one clamping element (7.3) in such a way that, in the coupled state of the overload clutch (7), the clamping element (7.3) is held in a form-fitting manner in the latching opening (7.7) by means of the force of the spring element (7.6).

11. Rotary feedthrough according to claims 9 and 10, **characterized in that** a plurality of second clutch halves (7.2) is formed or held by a latching ring (11), in which a plurality of latching openings (7.7) are arranged one behind the other in the circumferential direction around the axis of rotation (2).

12. Rotary feedthrough according to claims 8 and 10 or 11, **characterized in that** the housing (7.5) is inserted or screwed into the second rotor section (8.2), in particular only partially, from the outside.

13. Rotary feedthrough according to one of the claims 9 to 12, **characterized in that** the overload clutch (7) has a holding device (7.8) which holds the overload clutch (7) in the decoupled position after it has been triggered.

14. Rotary feedthrough according to claims 10 and 13, **characterized in that** the holding device (7.8) holds the at least one clamping element (7.3) outside the latching opening (7.7).

15. Rotary feedthrough according to one of claims 8 to 14, **characterized in that** the first rotor section (8.1) is sealed against the second rotor section (8.2) by means of at least one sealing ring (12) which, in particular, comprises graphite or is formed therefrom.

## Revendications

1. Traversée rotative avec un stator (1) et un rotor (3) capable de rotation autour d'un axe de rotation (2), qui est supporté dans ou sur le stator (1) au moyen d'au moins un palier (4) pendant le fonctionnement de la traversée rotative pour tourner autour de l'axe de rotation (2), dans laquelle
1.1 au moins un raccord de fluide (5) est prévu au moins sur le stator (1) et au moins un conduit de fluide (6) étanche vis-à-vis de l'environnement s'étend à travers le stator (1) et le rotor (3),
**caractérisée en ce que**
1.2 le rotor (3) comprend deux segments de rotor (8.1, 8.2), à travers lesquels l'au moins un conduit de fluide (6) s'étend, et au moins un accouplement à surcharge (7), les deux segments de rotor (8.1, 8.2) étant assemblés l'un à l'autre au moyen de l'au moins un accouplement à surcharge (7) de telle manière que, si un couple de rotation inférieur au couple de déclenchement de l'au moins un accouplement à surcharge (7) est exercé sur l'au moins un accouplement à surcharge (7), les deux segments de rotor (8.1, 8.2) sont couplés l'un avec l'autre de façon rigide en rotation et, si un couple de rotation égal ou supérieur au couple de déclenchement est exercé sur l'au moins un accouplement à surcharge (7), les deux segments de rotor (8.1, 8.2) sont découplés dans le sens de la circonférence autour de l'axe de rotation (2) et supportés de façon à pouvoir tourner l'un par rapport à l'autre autour de l'axe de rotation (2), **caractérisée en ce que**
1.3 l'au moins un accouplement à surcharge (7) comporte deux moitiés d'accouplement (7.1, 7.2) couplées l'une à l'autre de façon rigide en rotation par engagement positif, au moyen d'au moins un élément de serrage (7.3) soumis à une précontrainte élastique, dans l'état accouplé des deux segments de rotor (8.1, 8.2).

2. Traversée rotative selon la revendication 1, **caractérisée en ce que** l'accouplement à surcharge (7) peut être commuté de façon non destructive et réversible entre une position accouplée des moitiés d'accouplement (7.1, 7.2) et une position découplée des moitiés d'accouplement (7.1, 7.2).

3. Traversée rotative selon l'une des revendications 1 ou 2, **caractérisée en ce que** le couple de déclenchement de l'au moins un accouplement à surcharge (7) est réglable de façon variable.

4. Traversée rotative selon l'une des revendications 2 ou 3, **caractérisée en ce que** l'au moins un accouplement à surcharge (7) comporte un dispositif de rappel (7.4) avec lequel l'au moins un accouplement à surcharge (7) peut être commuté de la position découplée à la position accouplée, manuellement ou au moyen d'un actionneur pouvant être commandé.

5. Traversée rotative selon la revendication 4, **caractérisée en ce que** le dispositif de rappel (7.4) peut être actionné manuellement par l'extérieur quand l'accouplement à surcharge (7) est monté dans la traversée rotative.

6. Traversée rotative selon l'une des revendications 1 à 5, **caractérisée en ce que** les deux segments de rotor (8.1, 8.2) sont supportés l'un par rapport à l'autre avec au moins un roulement à billes (9, 10) intégré au rotor.

7. Traversée rotative selon l'une des revendications 1 à 6, **caractérisée en ce que** l'au moins un palier (4) est réalisé comme un roulement à billes.

8. Traversée rotative selon l'une des revendications 1 à 7, **caractérisée en ce que** le deuxième segment de rotor (8.2) entoure le premier segment de rotor (8.1) dans le sens de la circonférence autour de l'axe de rotation (2) et le premier segment de rotor (8.1) délimite le conduit de fluide (6) dans le sens de la circonférence autour de l'axe de rotation (2).

9. Traversée rotative selon l'une des revendications 1 à 8, **caractérisée en ce que** plusieurs accouplements à surcharge (7) sont disposés les uns à la suite des autres dans le rotor (3) dans le sens de la circonférence autour de l'axe de rotation (2).

10. Traversée rotative selon l'une des revendications 1 à 9, **caractérisée en ce qu'**une première moitié d'accouplement (7.1) de l'accouplement à surcharge (7) comporte un carter (7.5) dans lequel l'au moins un élément de serrage (7.3) est supporté avec possibilité de translation, en particulier de translation longitudinale, et/ou de rotation contre la force d'un élément de ressort (7.6), et une deuxième moitié d'accouplement (7.2) de l'accouplement à surcharge (7) comporte au moins une ouverture d'enclenchement (7.7) qui fait face à l'au moins un élément de serrage (7.3) de telle manière que, dans l'état accouplé de l'accouplement à surcharge (7), l'élément de serrage (7.3) est retenu par engagement positif dans l'ouverture d'enclenchement (7.7) avec la force de l'élément de ressort (7.6).

11. Traversée rotative selon les revendications 9 et 10, **caractérisée en ce que** plusieurs deuxièmes moitiés d'accouplement (7.2) sont formées ou retenues par une bague d'enclenchement (11) dans laquelle plusieurs ouvertures d'enclenchement (7.7) sont disposées les unes à la suite des autres dans le sens de la circonférence autour de l'axe de rotation (2).

12. Traversée rotative selon les revendications 8 et 10 ou 11, **caractérisée en ce que** le carter (7.5) est inséré ou vissé, en particulier en partie seulement, par l'extérieur dans le deuxième segment de rotor (8.2).

13. Traversée rotative selon l'une des revendications 9 à 12, **caractérisée en ce que** l'accouplement à surcharge (7) comporte un dispositif de maintien (7.8) qui maintient l'accouplement à surcharge (7) dans la position découplée après son déclenchement.

14. Traversée rotative selon les revendications 10 et 13, **caractérisée en ce que** le dispositif de maintien (7.8) maintient l'au moins un élément de serrage (7.3) à l'extérieur de l'ouverture d'enclenchement (7.7).

15. Traversée rotative selon l'une des revendications 8 à 14, **caractérisée en ce que** le premier segment de rotor (8.1) est rendu étanche vis-à-vis du deuxième segment de rotor (8.2) avec au moins un joint d'étanchéité (12), qui contient en particulier du graphite ou est composé de graphite.
